# FASCICULE DE BREVET EUROPEEN

(11) **EP 2 725 575 B1**
(45) Date de publication et mention de la délivrance du brevet: **09.01.2019**
(21) Numéro de dépôt: 13004872.1
(22) Date de dépôt: 10.10.2013
(51) Int. Cl.: G10K 11/178

(54) **Procédé et dispositif actif de traitement de bruit à bord d'un véhicule, et véhicule muni d'un tel dispositif**
Verfahren und aktive Vorrichtung zur Lärmbehandlung an Bord eines Fahrzeugs, und mit einer solchen Vorrichtung ausgestattetes Fahrzeug
Method and active device for dealing with noise on board a vehicle, and vehicle provided with such a device

(30) Priorité: 23.10.2012 FR 1202821
(43) Date de publication de la demande: 30.04.2014
(73) Titulaire: Airbus Helicopters, 13725 Marignane Cedex (FR)
(72) Inventeur: Caillet, Julien, F-13170 LES Pennes Mirabeau (FR); Marrot, Franck, F-13600 LA Ciotat (FR)
(74) Mandataire: GPI & Associés

(56) Documents cités:
- EP-A1- 2 149 875
- WO-A1-96/31872
- DE-A1-102011 013 343
- GB-A- 2 360 900
- US-A1- 2004 170 286

## Description

La présente invention concerne un procédé et un dispositif actif de traitement de bruit à bord d'un véhicule, et un véhicule muni d'un tel dispositif.

L'invention se situe donc dans le domaine du traitement des nuisances acoustiques à bord d'un aéronef.

La présente invention est plus particulièrement relative aux systèmes de traitement de bruit. En effet, la réduction sonore dans les aéronefs est une problématique croissante du fait de l'impact du bruit sur le confort et la santé des occupants d'un aéronef, aussi bien des passagers que de l'équipage.

Les impacts sur la santé des passagers sont de plus généralement estimés en considérant des métriques correspondant à des doses de bruit, dont l'amplitude dépend simultanément du niveau de bruit et de la durée d'exposition.

Le niveau sonore à l'intérieur des aéronefs peut être traité par l'ajout de traitements passifs visant à isoler les occupants des sources de bruit extérieur et à absorber les ondes acoustiques réfléchies dans l'habitacle.

Par ailleurs, des méthodes de contrôle actif visent à générer un contre-bruit pour induire une bulle de silence. Ces méthodes de contrôle actif ont montré leur efficacité pour la réduction de bruits harmoniques basses fréquences ou pour des moyennes ou hautes fréquences dans des zones localisées. Le développement de ces techniques actives dans les appareils présentant des signatures acoustiques harmoniques est particulièrement adapté pour obtenir une efficacité maximale sur des fréquences ciblées tout en maîtrisant la masse ajoutée.

Cependant, le contrôle actif du bruit présente, pour les basses-fréquences, des limites liées généralement à la capacité à générer un niveau sonore équivalent au niveau sonore ambiant à contrôler (en particulier pour les environnements bruyants).

De plus, le contrôle actif du bruit présente, pour les hautes-fréquences, des limites liées aux capacités des calculateurs et à l'effet très localisé du contrôle. En effet, les ondes acoustiques présentent une courte longueur d'onde aux hautes fréquences. Dès lors, un dispositif de contrôle du bruit actif aux hautes fréquences tend à générer une bulle de silence ayant des dimensions restreintes, et étant de fait très localisée.

En outre, les techniques de contrôle actif actuelles présentent également des difficultés à contrôler des signaux dont les propriétés varient rapidement dans le temps.

Les techniques d'anti-bruit actives consistent donc d'une façon générale à générer un contre-bruit sous la forme d'une onde acoustique destinée à atténuer le bruit. Ce contre-bruit est parfois dénommé « bruit secondaire », par opposition au bruit à traiter parfois dénommé « bruit primaire ».

On distingue généralement les techniques dites prédictives ou anticipatives (« feed forward ») où on utilise un capteur de bruit primaire de référence, corrélé à la source de bruit primaire à contrôler, de manière à anticiper les variations de ce bruit primaire, des techniques rétroactives (« feed back ») où ces variations sont compensées après leur apparition.

Les techniques rétroactives mettent en oeuvre des algorithmes connus par l'homme du métier sous les acronymes RLMS (« Recursive Least Mean Square ») ou IMC (« Internai Model Control ») par exemple, alors que les techniques prédictives mettent en oeuvre des algorithmes connus par l'homme du métier par exemple sous les acronymes LMS, FxLMS (« Filtered reference Least Mean Square »).

De plus, il est possible dans ce domaine technique de mettre en oeuvre un dispositif de mesure de bruit local. Le dispositif de mesure de bruit local vise à déterminer le bruit résultant de la combinaison des bruits secondaire et primaire.

Ce dispositif de mesure de bruit local peut comporter un capteur de bruit local, dénommé « capteur d'erreur » par l'homme du métier. En fonction du bruit local mesuré, l'unité de traitement adapte alors les coefficients du filtre réalisé par l'algorithme utilisé.

Ainsi, un calculateur élabore un signal de commande d'un actionneur acoustique, en prenant en considération une fonction de transfert évaluant un filtre acoustique naturel lié à l'environnement d'un individu.

On rappelle que la fonction de transfert permet d'établir un lien mathématique entre un bruit émis à un endroit donné et le bruit résultant à un autre endroit, concrètement le lien entre le bruit secondaire émis par des actionneurs acoustiques et le bruit local déterminé. Une telle fonction de transfert est parfois dénommée « fonction de transfert secondaire » par l'homme du métier.

La fonction de transfert dépend donc du cheminement suivi par le contre-bruit entre un actionneur acoustique et un capteur d'erreur par exemple.

Une solution connue consiste à identifier cette fonction de transfert en temps réel par une méthode « d'identification en ligne ».

Bien que ces systèmes de l'art antérieur présentent des qualités certaines, leur intégration à un giravion se heurte à des problèmes complexes qui tiennent notamment au niveau élevé des bruits à atténuer, à la quantité élevée de « raies spectrales» dénommées parfois composantes tonales dans le spectre du bruit à atténuer qui sont situées dans une bande de fréquences allant jusqu'à 10000 Hz environ, et à la présence de bruit large bande dans un tel spectre en particulier aux fréquences situées dans une plage allant de 10 à 1000 Hz.

Selon le document « selection of active noise control strategy : two test cases » , Jari Kataja et al, Joint Baltic-Nordic Acoustics Meeting 2004, 8-10 June 2004, des phénomènes psychoacoustiques devraient être pris en compte pour choisir la technique à utiliser.

Il a été proposé par les brevets FR 2.769.396 et US 6.224.014 de réduire le bruit de raies à l'intérieur d'un hélicoptère en commandant un actionneur acoustique en fonction de mesures délivrées par un capteur acoustique ou vibratoire.

Ces documents se concentrent sur la réduction des bruits de raies provenant d'organes mécaniques. Ce type de contrôle ne traite donc qu'une partie du bruit et ne permet pas un contrôle spatial efficace pour tous les passagers d'une cabine.

Il a été proposé par les brevets FR 2.802.328 et US 6.502.043 d'utiliser en outre un capteur (de référence) effectuant une mesure corrélée avec une source de bruit, et de pondérer les signaux de mesures de bruit pour privilégier des zones déterminées de l'aéronef, par exemple à proximité de sièges de passagers.

Les actionneurs acoustiques utilisés peuvent être des hauts parleurs ou des actionneurs piézo-électriques, les capteurs pouvant être des microphones ou des accéléromètres. Les algorithmes utilisés pour minimiser les bruits peuvent être de type anticipatif ou rétroactif (en langue anglaise « feedforward » ou « feedback »).

Néanmoins, cette solution ne permet pas de suivre le déplacement des oreilles des passagers et donc d'adapter la zone d'efficacité du contrôle en temps réel.

Le brevet EP 1.031.136 décrit un système d'atténuation active du bruit à l'intérieur de la cabine d'un hélicoptère comportant une boîte de transmission principale de puissance et des pieds fixant la boîte à la structure de la cabine. Le système commande plusieurs vérins liés à chaque pied pour appliquer au pied des « contre-vibrations », afin de réduire des vibrations à l'origine du bruit dues à des pignons de ladite boîte, dont la fréquence est voisine de 700 Hz.

Cette solution est limitée en gamme de fréquences et est surtout limitée en efficacité spatiale. A ces fréquences, il est impossible d'obtenir un contrôle global optimisé pour toutes les positions des passagers en contrant uniquement les vibrations en pieds de barre. Les transferts entre pieds de barre et positions des passagers sont différents d'une position d'un passager à l'autre. Seule l'annulation complète des vibrations en pied de barre pourrait avoir la même efficacité sur le bruit issu du transfert vibratoire quelle que soit la position des passagers.

Il resterait néanmoins le bruit issu du transfert aérien qui n'est pas contrôlé par les actionneurs. Or, ce bruit issu du transfert aérien est non négligeable dans le cas des hélicoptères. De plus, le transfert de ce bruit est également différent d'une position à l'autre.

En outre, les solutions proposées dans les brevets ci-dessus traitent uniquement les bruits de raies spectrales issues de systèmes mécaniques et ne permettent donc pas de réduire les bruits « large bande » pouvant être d'origine aérodynamique.

Le brevet US 5.845.236 propose d'utiliser un dispositif d'atténuation active en complément de résonateurs vibratoires.

Le brevet US 5.754.662 propose de traiter séparément des basses fréquences et des fréquences supérieures aux basses fréquences, et de commander séparément deux actionneurs respectivement adaptés à ces fréquences basses et supérieures. Il est notamment proposé d'utiliser un caisson de sons graves pour les fréquences basses.

Le brevet EP 917.706 décrit un système d'atténuation du bruit adapté à un avion bimoteur.

Ce brevet décrit un traitement des vibrations de la structure d'un aéronef, et par suite un traitement à la source du rayonnement acoustique de la structure via des actionneurs vibratoires placés sur la structure.

Le brevet FR 2.899.011 décrit un dispositif de contrôle à séparation de voies utilisant un organe de pondération psychoacoustique des signaux reçus et/ou émis.

Une voie est dédiée au contrôle des très basses fréquences via un actionneur acoustique à évent optimisé ou vibrateur électromécanique. Une autre voie est dédiée au contrôle des moyennes et hautes fréquences via des couples microphones/haut-parleurs aux positions passagers.

Les microphones sont fixés aux sièges, les haut-parleurs restent également fixes.

De plus, rien ne permet de prendre en considération l'influence du mouvement de la tête d'un passager sur la mesure du bruit et sur la transmission du contre-bruit. La zone d'efficacité spatiale du contrôle dans les hautes fréquences peut alors être limitée, la bulle de silence créée ne suivant pas le passager.

Le brevet US 4.977.600 décrit un siège actif utilisant un ensemble de microphones dans un appui-tête en tant que microphones d'erreur afin de générer une zone de contrôle à géométrie définie. Ce brevet décrit également la possibilité d'utiliser plusieurs actionneurs acoustiques pour des bandes de fréquences séparées.

Le brevet US 6.343.127 décrit un système de contrôle actif acoustique positionnant des actionneurs acoustiques dans une enceinte.

Le document WO 03/073415 décrit un autre système dans lequel on utilise une pondération de signaux variables dans le temps pour éviter de saturer les actionneurs.

Le document WO 00/14.722 prévoit un système de contrôle actif de bruit intégré, un passager adaptant la position d'un ensemble actionneur acoustique /capteur pour améliorer la performance.

Le document FR 2.899.011 vise à résoudre de tels problèmes à l'aide d'un dispositif comportant :
- au moins un capteur de bruit local tel qu'un microphone situé en cabine ;
- au moins un haut-parleur;
- au moins une unité de traitement arrangée pour recevoir des signaux de mesure de bruit délivrés par le(s) microphone(s), et pour délivrer au(x) haut-parleur(s) des signaux de commande afin d'atténuer le bruit dans la cabine ;
- au moins un résonateur acoustique couplé acoustiquement à un haut-parleur et à la cabine.

L'unité de traitement émet alors un signal de commande pour générer un bruit secondaire apte à contrer un bruit primaire, et envoie ce signal de commande au haut parleur et au résonateur.

L'élaboration du bruit secondaire est réalisé à l'aide d'un algorithme de type prédictif ou rétroactif, en prenant en considération un signal de bruit local provenant du capteur de bruit local, et le cas échéant d'un signal de bruit primaire de référence provenant du capteur de bruit primaire de référence.

Ainsi, l'unité de traitement ordonne à l'actionneur acoustique de générer un bruit secondaire optimisé pour être en opposition de phase avec le bruit primaire.

L'unité de traitement peut viser à minimiser le bruit local mesuré en décibels ou encore une fonction prédéterminée prenant en compte le confort du passager selon une approche psychoacoustique.

Ce dispositif est particulièrement efficace pour réduire les bruits harmoniques à basses et moyennes fréquences en créant un bulle de silence dans un périmètre important.

On pourrait envisager d'adapter le dispositif pour lui permettre de réduire les bruits à hautes fréquences. Or, le haut parleur créerait alors une bulle de silence de faible dimension, en générant un bruit additionnel particulièrement gênant en dehors de cette bulle de silence.

Dès lors, le dispositif ne parait pas adapté à un bruit à haute fréquence. Il est à noter que ce bruit à haute fréquence est particulièrement gênant dans la mesure où il se trouve dans une plage de fréquences correspondant à la sensibilité maximale d'une oreille humaine.

En outre, le mouvement de la tête d'un individu a un impact sur la réponse des actionneurs, en modifiant le chemin de transmission du contre-bruit, dit chemin secondaire.

Par ailleurs, on note que le document US2004/0170.286 prévoit un système permettant d'adapter un dispositif acoustique d'un véhicule en fonction de la présence ou non de personnes dans le véhicule, cette présence étant détectée par un système de reconnaissance de forme.

Le document US 6.553.296 décrit un dispositif capable de déterminer la présence macroscopique et la place relative d'un occupant dans un véhicule.

Ces deux documents ne paraissent pas en mesure de résoudre le nouveau problème relatif à la réduction voire la suppression de la gêne générée par un bruit à haute fréquence en fonction de la position relative des oreilles d'un individu par rapport à des actionneurs acoustiques.

Le document EP 2.119.627 propose un coulissement d'un support d'actionneurs acoustiques dans une cavité placée dans le dos d'un siège, ce coulissement étant relatif à l'inclinaison de l'assise demandée par un passager sur son siège.

Ce siège comporte en outre une coque qui entoure le passager. Une telle coque peut être préjudiciable dans une cabine aux dimensions restreintes, telle qu'une cabine de giravion par exemple.

Le document FR 2.808.371 décrit un dispositif de contrôle actif intégré dans ses appuie-têtes de sièges et permettant de mesurer à distance le son à proximité d'une oreille.

On connait aussi les documents WO 96/31872 et DE 10 2011 013343.

Le document EP2149875 divulgue l'estimation de la fonction de transfert secondaire entre une source sonore et la position de l'auditeur. Cette dernière est prise en compte en évaluant les variations de la fonction de transfert primaire.

La présente invention a alors pour objet un dispositif de traitement de bruit selon la revendication 1. Le dispositif peut être un dispositif actif pour tenter d'atténuer le bruit perçu par un occupant d'un aéronef.

Selon l'invention, un dispositif de traitement du bruit à proximité d'une tête d'un passager d'un véhicule comporte au moins un capteur acoustique de bruit local. Ce dispositif comporte de plus au moins un système acoustique pour générer un contre-bruit, chaque système acoustique étant muni d'un support et d'au moins un actionneur acoustique porté par le support.

Par exemple, le dispositif comporte deux systèmes acoustiques disposés de part et d'autre de la tête du passager. Chaque actionneur acoustique envoie un contre-bruit secondaire respectivement vers chaque oreille ce qui permet d'optimiser le dispositif.

Ce dispositif est notamment remarquable en ce qu'il comporte :
- un capteur de position pour déterminer la position de la tête du passager,
- au moins une unité de traitement reliée au capteur acoustique de bruit local pour recevoir un signal de bruit local, l'unité de traitement étant configurée pour délivrer à chaque actionneur acoustique un signal de commande au moins en fonction du signal de bruit local et d'au moins une fonction de transfert par oreille relative au transfert des ondes acoustiques entre un actionneur acoustique et le passager,
- un moyen d'adaptation actif coopérant avec le capteur de position pour maintenir chaque fonction de transfert utilisée lors de l'élaboration de chaque signal de commande représentative du chemin à parcourir par ledit contre-bruit.

Selon les variantes, l'unité de traitement et le moyen d'adaptation peuvent être des organes de deux équipements distincts, ou encore des composantes d'un unique calculateur.

Par exemple, un calculateur peut comprendre un organe de mémoire et un organe de calcul exécutant des instructions mémorisées dans l'organe de mémoire pour remplir le rôle d'unité de traitement et de moyens d'adaptation.

Le capteur acoustique de bruit local vise à déterminer un bruit local à proximité immédiate de la tête du passager.

Dès lors, selon une première version, ce capteur de bruit local peut être un capteur acoustique disposé sur la tête d'un individu.

Ce capteur acoustique de bruit local peut être mobile pour être déplacé conjointement avec la tête du passager, et plus précisément avec au moins une oreille de cette tête.

Ainsi, le capteur acoustique de bruit local est par exemple un microphone disposé sur une oreillette, le passager disposant l'oreillette à proximité d'une de ses oreilles.

De même, le microphone peut être disposé sur un casque servant à écouter une émission radiophonique ou encore les paroles d'un film vidéo.

Le capteur acoustique de bruit local peut être relié à l'unité de traitement par une liaison filaire ou une liaison sans fil.

Selon une deuxième version, le capteur de bruit local est un capteur acoustique ne mesurant pas directement le bruit à proximité d'une oreille. Ce capteur de bruit local peut être agencé sur le fauteuil accueillant un passager.

Cette deuxième version présente l'avantage de ne pas avoir par exemple à utiliser un casque ou une oreillette pour les passagers.

La première et la deuxième version peuvent être combinées. Ainsi, la première version est mise en oeuvre lorsqu'un individu souhaite utiliser un casque par exemple, la deuxième version étant mise en oeuvre dans le cas contraire.

L'unité de traitement peut déterminer le bruit secondaire en utilisant d'une part le signal provenant du capteur de bruit local, et d'autre part le signal provenant du capteur de position.

En utilisant un algorithme usuel, l'unité de traitement peut alors reconstituer le bruit local.

En résumé, on peut mesurer directement le bruit local selon la première version, et déterminer le bruit local selon la deuxième version.

Par ailleurs, chaque actionneur acoustique comporte éventuellement un haut-parleur, tel qu'un haut parleur utilisé pour diffuser des messages dans le véhicule et connu sous le nom de « public-address » ou de « passenger-address ».

En outre, le capteur de position peut être un système de mesure de la position d'un objet usuel. Ce capteur de position est relié à l'unité de traitement pour lui fournir un signal de position relatif indifféremment à la position de la tête d'un individu ou plus particulièrement à la position des oreilles de cette tête.

Eventuellement, l'unité de traitement n'envoie pas le signal de commande aux actionneurs acoustiques pour requérir l'émission d'un bruit secondaire lorsque la tête du passager, ou plus spécifiquement au moins une oreille de ce passager, se trouve dans une zone où lesdits actionneurs sont inefficaces.

En effet, on rappelle que la bulle de silence créée par les actionneurs acoustiques a des dimensions réduites du fait de la faible longueur d'onde des ondes à hautes fréquences. De plus, on rappelle aussi qu'en dehors de la bulle de silence, le bruit secondaire peut venir augmenter le bruit primaire et donc le désagrément auditif.

Ainsi, si la tête ou au moins une oreille d'un individu est en dehors du champ pouvant être couvert par une bulle de silence, l'unité de traitement peut ne plus requérir la création d'un bruit secondaire.

Par exemple, si le passager se penche pour atteindre un objet posé sur le sol, les actionneurs acoustiques ne seront plus en mesure de créer une bulle de silence au niveau des oreilles du passager. Les actionneurs acoustiques n'émettent alors pas le bruit secondaire.

On note que le capteur de position peut être d'un type usuel, et notamment faire intervenir les moyens des documents US2004/0170.286 ou US 6.553.296.

Ainsi, l'invention prévoit de mesurer le bruit local à proximité immédiate d'un individu. Ainsi, il devient possible de traiter des bruits à des hautes fréquences. La bulle de silence générée pour contrer un bruit à haute fréquence, à savoir supérieure à 500 Hz a de fait une dimension réduite, mais suffisante en étant localisée sur l'oreille du passager, cette bulle de silence se déplaçant conjointement avec les oreilles du passager.

Ce dispositif prévoit donc un système actif, l'unité de traitement modifiant le signal de commande envoyé à chaque actionneur acoustique en fonction de la position de la tête du passager, et favorablement en fonction de la position des oreilles du passager. De plus, l'unité de traitement modifie le signal de commande en fonction du bruit primaire à contrôler, à savoir du bruit primaire de référence à réduire voire à supprimer.

Cette unité de traitement peut comporter un processeur associé à une mémoire par exemple.

Par rapport au document WO 00/14.722, on note que le passager doit faire en sorte de déplacer un système pour améliorer la performance. Dans le cas de l'invention, la position relative du capteur acoustique de bruit local et de l'actionneur évolue. De ce fait, la contrainte de distance fixe entre actionneur acoustique et capteur acoustique imposée par le document WO 00/14.722 est supprimée.

Toutefois, le passager tend à bouger sa tête. Dès lors, ce mouvement de la tête tend à induire une modification des fonctions de transfert. Sans intervention, le contre-bruit généré peut s'avérer inefficace, voire contre-productif.

Par conséquent, le dispositif selon l'invention comporte un moyen d'adaptation qui coopère avec le capteur de position. Lorsque la position de la tête d'un passager évolue, le dispositif fait alors appel au moyen d'adaptation pour prendre en considération ce mouvement, afin de toujours utiliser des fonctions de transfert représentatives du chemin à parcourir par ledit contre-bruit.

Le moyen d'adaptation actif agit en continu sur chaque système acoustique durant le vol, contrairement à des dispositifs prévoyant un déplacement d'actionneur en fonction de la position d'une assise par exemple.

La combinaison d'un capteur de bruit local, d'un capteur de position, d'une unité de traitement et d'un moyen d'adaptation actif permet de générer une bulle de silence réduite à proximité d'un individu, indépendamment de la position de sa tête.

De plus, le dispositif de traitement peut comporter une ou plusieurs des caractéristiques qui suivent.

Par exemple, le moyen d'adaptation actif peut comporter :
- soit un moyen de maintien configuré pour agir sur chaque système acoustique afin de maintenir constante chaque fonction de transfert utilisée par l'unité de traitement,
- soit un moyen de détermination configuré pour choisir dans une bibliothèque chaque fonction de transfert adaptée à une position courante de ladite tête,
- soit ledit moyen de maintien et ledit moyen de détermination.

Dès lors, selon un premier mode de réalisation, on modifie les fonctions de transfert à utiliser lorsque la tête d'un individu se déplace pour les rendre conformes au nouveau chemin à parcourir par un contre-bruit.

Selon le premier mode de réalisation, le moyen d'adaptation actif peut comporter une bibliothèque de fonctions de transfert associées chacune à une position de la tête d'un individu, et un moyen de détermination configuré pour déterminer chaque fonction de transfert à utiliser en fonction de ladite position, l'unité de traitement mettant en oeuvre chaque fonction de transfert déterminée par le moyen de détermination.

Le constructeur peut donc bâtir par essais une telle bibliothèque.

Selon l'invention, on adapte le système acoustique lorsque la tête d'un individu se déplace, pour que les fonctions de transfert utilisées demeurent représentatives du chemin à parcourir par un contre-bruit.

Selon l'invention, le support comportant un moyen de soutien par système acoustique, chaque moyen de soutien portant au moins un actionneur acoustique, le moyen d'adaptation actif peut comporter un système de déplacement pour déplacer en continu chaque moyen de soutien en fonction de la position de la tête d'un passager afin de maintenir chaque fonction de transfert utilisée lors de l'élaboration de chaque signal de commande représentative du chemin à parcourir par ledit contre-bruit.

Par exemple, le système de déplacement comprend au moins un vérin pour déplacer chaque moyen de soutien. Lorsque la tête d'un passager bouge, le moyen d'adaptation actif requiert alors le déplacement des systèmes acoustiques en conséquence.

Selon une deuxième variante, chaque système acoustique ayant une pluralité d'actionneurs, le moyen d'adaptation actif comporte un moyen de contrôle pour contrôler en continu chaque actionneur en fonction de la position de la tête d'un passager.

Par exemple, chaque système acoustique comporte une pluralité de haut-parleurs.

En fonction de la position de la tête d'un individu, on active ou désactive certains haut-parleurs.

Il est aussi possible de générer un signal de commande par haut-parleur, et de pondérer ces signaux par des gains en fonction de la position de la tête d'un individu.

Par ailleurs et indépendamment de la réalisation, chaque support peut comporter un moyen d'isolation acoustique passif.

Chaque support d'un système acoustique comportant un moyen de soutien portant chaque actionneur acoustique du système acoustique, chaque moyen de soutien comportant une coque, ledit moyen d'isolation acoustique passif inclut un isolant acoustique en mousse agencé dans chaque coque.

On se référera à la littérature pour déterminer les caractéristiques permettant d'atteindre les résultats souhaités.

L'invention prévoit donc éventuellement d'associer un système d'isolation passif à un système d'isolation actif.

Ainsi, le support peut présenter un moyen d'isolation acoustique passif pour générer une isolation passive.

Ce moyen d'isolation passif peut être surprenant dans un aéronef aux dimensions réduites tel qu'un giravion. Toutefois, l'association d'un système actif et d'un système passif permet de mettre en oeuvre une isolation passive très localisée, et donc peu encombrante.

L'isolation active pratiquée permet par exemple d'optimiser la filtration de bruits émis dans une plage de fréquences, par exemple entre une fréquence de 50 Hz environ et une fréquence de 3000 Hz environ.

De plus, l'isolation passive pratiquée permet par exemple d'optimiser la filtration de bruits émis en dehors de cette plage de fréquences.

L'invention propose donc le couplage innovant d'un traitement passif et d'un traitement actif du bruit, ces deux traitements étant intégrés dans un système acoustique pouvant inclure des supports de type « appuie-tête ».

Par couplage, on entend que le design de la protection passive est optimisé de manière à d'une part traiter des signaux difficilement contrôlables par traitement actif du fait de leur domaine fréquentiel ainsi que de leur signature ou de leur caractère variable (bruit aérodynamique par exemple), et à d'autre part permettre une amélioration des performances du traitement actif.

En effet, une des limites des techniques de contrôle actif réside dans la difficulté à atténuer les différentes composantes de signaux présentant une dynamique importante. L'utilisation de traitements passifs appropriés, absorbants et isolants, peut ainsi permettre la réduction de la dynamique de la partie contrôlable par traitement actif du signal. Les algorithmes de contrôles actifs sont ainsi adaptés à la protection passive définie. Cette approche permet d'éviter ou de réduire la nécessité d'ajouter des filtres spécifiques dans la boucle de contrôle actif, filtres introduisant des opérations de calculs et des délais supplémentaires dans la transmission du contre-bruit.

Par ailleurs, pour optimiser les coefficients du filtre que l'unité de traitement réalise, selon une première version, cette unité de traitement peut mettre en oeuvre un algorithme de type prédictif. Dès lors, le dispositif comporte un capteur de bruit primaire corrélé à une source du bruit à traiter, le capteur de bruit primaire étant relié à l'unité de traitement pour lui fournir un signal de bruit primaire.

Selon une seconde version, l'unité de traitement peut mettre en oeuvre un algorithme de type rétroactif. L'unité de traitement génère artificiellement le bruit primaire à traiter en fonction du signal de commande envoyé et du signal de bruit local reçu.

En outre, le dispositif peut comporter un dispositif de dosage configuré pour déterminer la dose de bruit reçue par le passager à partir d'informations provenant du capteur de bruit local, le dispositif de dosage coopérant avec l'unité de traitement.

Le dispositif de dosage peut comprendre un processeur intégrant le signal de bruit local sur une période de temps pour évaluer la dose de bruit reçue.

Ce processeur peut pondérer le signal intégré selon des techniques connues, pour faire référence aux décibels pondérés A qui sont usités lors de la mesure de bruits environnementaux. Le décibel pondéré A constitue une unité du niveau de pression acoustique.

Ainsi, en deçà d'une dose de bruit seuil, l'unité de traitement peut mettre en oeuvre un algorithme pour minimiser le bruit mesuré par le capteur de bruit local.

Par contre, au-delà de cette dose de bruit seuil, l'unité de traitement peut mettre en oeuvre un algorithme pour minimiser le bruit mesuré par le capteur de bruit local et pondéré A.

Outre un dispositif de traitement de bruit, l'invention a pour objet un véhicule mettant en oeuvre ce dispositif, un giravion par exemple.

Ainsi, selon l'invention un véhicule est muni d'au moins un siège pour accueillir un passager, ce véhicule comportant un dispositif de traitement du bruit autour d'une tête d'un passager assis sur ce siège.

Ce dispositif est alors du type décrit précédemment.

Par ailleurs, le véhicule peut avoir une ou plusieurs des caractéristiques qui suivent.

Optionnellement, chaque actionneur acoustique est agencé dans ledit siège.

Par exemple, le support de chaque système acoustique peut être un appui-tête.

Eventuellement, dans le cadre d'une unité de traitement mettant en oeuvre une technique anticipative, le dispositif de traitement possède un capteur de bruit primaire de référence corrélé à la source du bruit à traiter, ledit capteur de bruit primaire étant relié à l'unité de traitement du dispositif pour lui fournir un signal de bruit primaire.

Le capteur de bruit primaire de référence est favorablement agencé en dehors d'une zone susceptible d'être influencée par le bruit secondaire généré par les actionneurs acoustiques.

Avantageusement, le véhicule étant un aéronef muni d'une boîte de transmission principale de puissance entre un moteur et un rotor, la boîte de transmission principale de puissance étant agencée dans un compartiment donné, le capteur de bruit primaire est disposé dans ce compartiment.

De manière additionnelle, le véhicule comportant une pluralité de sièges associés chacun à un dispositif de traitement du bruit muni d'une unité de traitement, au moins deux unités de traitement de deux dispositifs distincts sont intégrées au sein d'un même calculateur.

Ainsi, le véhicule comporte par exemple :
- au moins un système acoustique pour chaque dispositif de traitement associé à un siège,
- un capteur acoustique de bruit local par passager assis sur un siège,
- un capteur de position de la tête de chaque passager pour chaque dispositif de traitement associé à un siège,
- un calculateur commandant l'ensemble des actionneurs acoustiques.

On comprend qu'il est aussi possible de mettre en oeuvre des unités de traitement totalement indépendantes, une unité de traitement étant par exemple solidarisée à chaque siège.

De même, on peut prévoir un capteur de bruit primaire de référence par siège, chaque capteur de bruit primaire de référence étant par exemple solidarisé à un siège en dehors de la zone d'influence de ou des actionneur(s) acoustique(s) de ce siège.

L'invention concerne en outre le procédé mis en oeuvre par le dispositif de traitement selon l'invention selon la revendication 11.

Selon ce procédé, on atténue un bruit à bord d'un véhicule comportant un siège apte à accueillir un passager en utilisant un dispositif comportant au moins un système acoustique muni d'un support et d'au moins un actionneur acoustique porté par le support. Au cours du procédé, on effectue une filtration active du bruit en :
- déterminant en permanence un bruit local au niveau de la tête du passager indépendamment de la position de ladite tête à l'aide d'un capteur de bruit local,
- élaborant un signal de commande d'au moins un actionneur acoustique à partir du bruit local mesuré pour créer un contre-bruit générant une bulle de silence mobile liée à la tête du passager, et à partir d'au moins une fonction de transfert relative à un filtre acoustique naturel lié à l'environnement du siège,
- déterminant la position de ladite tête pour maintenir chaque fonction de transfert utilisée lors de l'élaboration dudit signal de commande représentative du chemin à parcourir par ledit contre-bruit.

Par exemple, on maintient chaque fonction de transfert utilisée lors de l'élaboration dudit signal de commande représentative du chemin à parcourir par ledit contre-bruit :
- soit en agissant sur chaque système acoustique afin de maintenir constante chaque fonction de transfert utilisée par l'unité de traitement, et/ou
- soit en choisissant dans une bibliothèque chaque fonction de transfert à utiliser en fonction de la position courante de la tête d'un individu.

En outre, on peut effectuer une filtration passive du bruit à l'aide d'un moyen passif comprenant un support isolé acoustiquement.

L'invention et ses avantages apparaîtront avec plus de détails dans le cadre de la description qui suit avec des exemples de réalisation donnés à titre illustratif en référence aux figures annexées qui représentent :
- la figure 1, un graphe illustrant un spectre de bruit d'un hélicoptère,
- la figure 2, un schéma illustrant un premier mode de réalisation,
- la figure 3, un schéma illustrant une première variante d'un deuxième mode de réalisation,
- la figure 4, un schéma illustrant une deuxième variante d'un deuxième mode de réalisation,
- la figure 5, un schéma présentant un moyen de déplacement de la première variante d'un deuxième mode de réalisation,
- la figure 6, une vue schématique d'un véhicule selon l'invention, et
- la figure 7, un schéma illustrant le procédé mis en oeuvre selon l'invention.

Les éléments présents dans plusieurs figures distinctes sont affectés d'une seule et même référence. De plus, on note que les figures annexées sont noté « Fig. » par commodité sur les dessins.

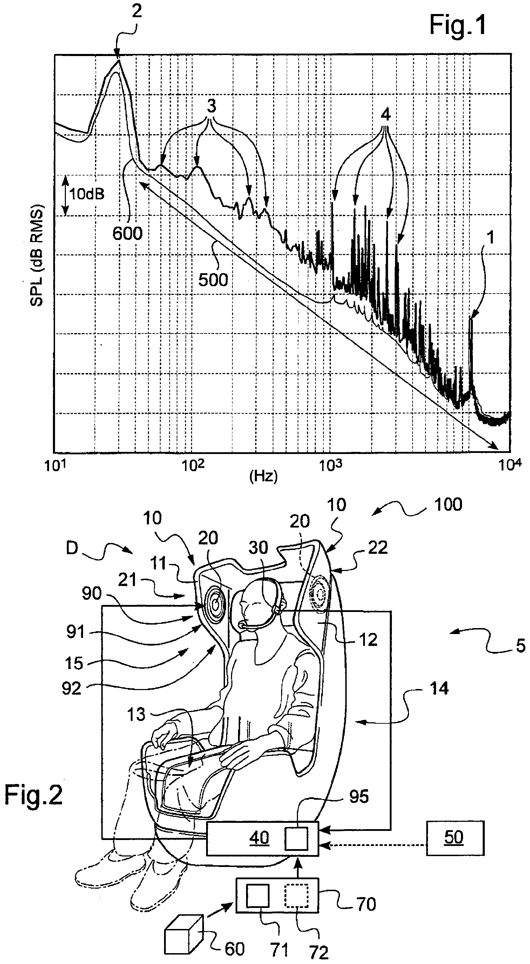

Conformément au graphe de la figure 1, le spectre 1 du bruit régnant dans la cabine d'un hélicoptère présente un niveau croissant jusqu'à atteindre un maximum 2 dépassant 100 décibels pour des fréquences sonores voisines de 20 à 40 Hz.

Ensuite, le niveau de bruit présente une composante dite large bande 500 couvrant des fréquences de l'ordre de 50 à 10000 Hz, dont l'amplitude présente une tendance décroissante avec la fréquence, incluant des premières raies 3 centrées sur des fréquences de l'ordre de 50 à 500 Hz suivies de deuxièmes raies 4 centrées sur des fréquences de l'ordre de 500 à 10000 Hz.

La présente invention vise notamment à réduire l'amplitude, voire à supprimer la composante large bande et les raies 3, 4.

Plus particulièrement, l'invention prévoit un traitement actif visant à traiter les raies présentes dans une plage moyenne de fréquences allant par exemple de 50 Hz à 3000 Hz, et la composante large bande dans une plage moyenne de fréquences allant par exemple de 50 Hz à 1000 Hz.

En complément, un traitement passif peut viser à traiter les raies présentes en dehors de cette plage de fréquences, par exemple dans une plage haute de fréquences allant de 3000 Hz à 10000 Hz.

Dès lors, l'invention peut permettre d'obtenir par exemple le spectre 600 du bruit dans la cabine.

Les figures 2, 3 et 4 présentent respectivement un premier mode de réalisation, une première variante d'un deuxième mode de réalisation, et une deuxième variante d'un deuxième mode de réalisation d'un dispositif de traitement du bruit D autour d'un passager assis sur un siège 100 d'un véhicule 5.

Classiquement, un siège 100 comporte une assise 13 et un dossier 14 pourvu d'une têtière 15, un passager assis sur l'assise 13 appuyant son dos contre le dossier 14 et sa tête contre la têtière 15.

Indépendamment du mode de réalisation et en référence à la figure 2, le dispositif D de traitement du bruit comporte au moins un système acoustique 21, 22 muni d'un émetteur acoustique. Chaque émetteur acoustique inclut au moins un actionneur acoustique 20 porté par un support 10.

Par exemple deux systèmes acoustiques 21, 22 sont munis chacun d'un actionneur acoustique 20 de type haut-parleur à haut rendement intégré.

Les deux systèmes acoustiques 21, 22 sont éventuellement disposés de part et d'autre de la tête de l'individu assis sur le siège.

En outre, chaque support 10 peut être un pan 11, 12 d'un appui-tête.

Par ailleurs, les actionneurs acoustiques 20 sont reliés à une unité de traitement 40 du dispositif D, tel qu'un processeur ou un segment de code exécuté par un processeur par exemple. L'unité de traitement 40 peut être liée à chaque actionneur acoustique 20 par une liaison filaire ou sans fil.

De plus, le dispositif D est pourvu d'un capteur de position 60 envoyant un signal de position. Le signal de position est alors relatif à la position de la tête du passager dans le véhicule, voire plus précisément à la position des oreilles de la tête de ce passager.

En outre, le dispositif D est muni d'un capteur acoustique de bruit local 30 pour déterminer le bruit à proximité immédiate des oreilles d'un individu.

Ce capteur acoustique de bruit local 30 peut être un capteur d'erreur mobile agencé sur la tête du passager assis dans le siège 10, et donc à proximité immédiate de l'une de ses oreilles. Ainsi, le capteur acoustique de bruit local 30 se déplace dans la cabine du véhicule conjointement avec la tête du passager, et plus spécifiquement conjointement avec les oreilles du passager.

Un tel capteur acoustique de bruit local 30 peut être du type mini-microphone des systèmes auditifs, microphone-cravate, ou encore microphone d'oreillette.

Selon une autre variante, le capteur de bruit local peut être un capteur d'erreur fixe. En combinant les informations provenant d'un tel capteur d'erreur fixe avec les informations provenant du capteur de position, il est alors possible de déterminer le bruit présent localement à proximité de la tête de l'individu assis sur le siège.

Indépendamment de la variante, le capteur acoustique de bruit local 30 est alors relié à l'unité de traitement 40 par une liaison filaire ou sans fil usuelle, le capteur acoustique de bruit local envoyant un signal de bruit local à l'unité de traitement 40.

Par ailleurs, selon une option visant à implémenter une technique anticipative, le dispositif D peut être pourvu d'un capteur de bruit primaire 50 de référence. Ce capteur de bruit primaire 50 envoie un signal de bruit primaire à l'unité de traitement, en utilisant une liaison filaire ou sans fil.

Dès lors, l'unité de traitement émet un signal de commande par actionneur acoustique en fonction du signal de bruit local, voire en fonction d'un signal de bruit primaire.

De plus, l'unité de traitement fait appel a au moins une fonction de transfert par système acoustique pour générer les signaux de commande.

Or, ces fonctions de transfert dépendent du chemin à parcourir par un son émis via les actionneurs acoustiques.

Par suite, le dispositif D comporte un moyen d'adaptation actif 70 coopérant avec le capteur de position 60 pour maintenir chaque fonction de transfert, utilisée lors de l'élaboration de chaque signal de commande, représentative du chemin à parcourir par un contre-bruit. En bougeant, un individu ne risque donc pas d'induire un dysfonctionnement du dispositif.

Le moyen d'adaptation peut comprendre un processeur ou un segment de code exécuté par un processeur par exemple. Le moyen d'adaptation et l'unité de traitement forment éventuellement conjointement un calculateur.

Selon le mode de réalisation, ledit moyen d'adaptation actif comporte :
- selon le premier mode de réalisation un moyen de détermination configuré pour choisir dans une bibliothèque chaque fonction de transfert adaptée à une position courante de ladite tête,
- selon le deuxième mode de réalisation un moyen de maintien configuré pour agir sur chaque système acoustique afin de maintenir constante chaque fonction de transfert utilisée par l'unité de traitement.

Un troisième mode réalisation peut résulter de la combinaison de ces deux modes de réalisation.

Selon le premier mode de réalisation de la figure 2, le moyen d'adaptation actif 70 comporte une bibliothèque de fonctions de transfert associées chacune à une position de la tête d'un individu.

Le constructeur établit donc par essais une bibliothèque munie d'une pluralité de jeux de fonctions de transfert, chaque jeu étant associé à une position de la tête d'un individu. La bibliothèque est mémorisée dans une mémoire 71 du moyen d'adaptation actif 70.

Le moyen d'adaptation actif 70 est de plus muni d'un moyen de détermination 72 configuré pour déterminer chaque fonction de transfert à utiliser en fonction de ladite position. L'unité de traitement met en oeuvre chaque fonction de transfert déterminée par le moyen de détermination 72 lors de l'élaboration des signaux de commande.

Selon le premier mode de réalisation, on choisit donc les fonctions de transfert à utiliser en fonction de la position de la tête d'un individu.

Par contre, selon le deuxième mode de réalisation, un moyen de maintien agit sur les systèmes acoustiques pour n'utiliser qu'un jeu unique de fonctions de transfert.

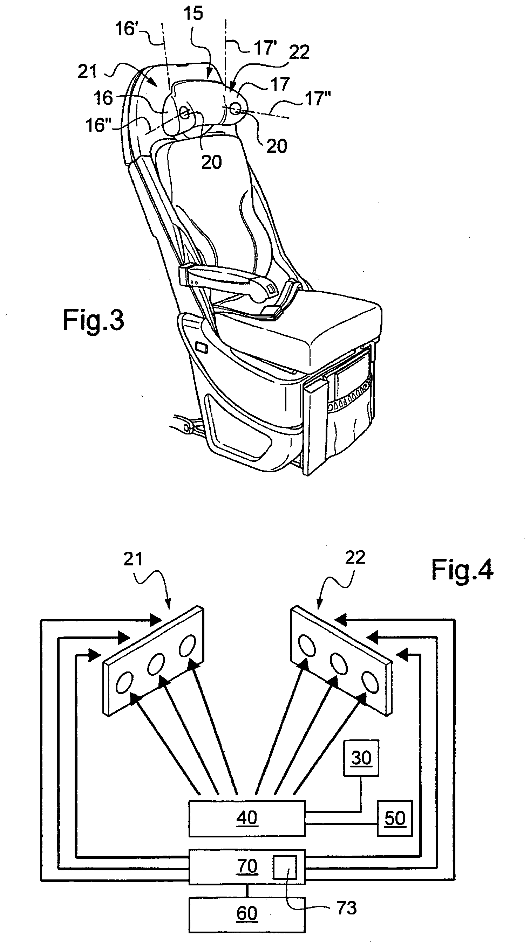

Selon la première variante du deuxième mode de réalisation représentée sur la figure 3, la têtière 15 est munie de deux pans latéraux 16, 17 mobiles, chaque pan latéral 16, 17 étant apte à effectuer une rotation autour d'au moins un axe de rotation 16', 16", 17', 17".

Chaque pan latéral représente ainsi un moyen de soutien mobile qui intègre alors au moins un actionneur acoustique 20 de type haut-parleur par exemple.

Le moyen de maintien comporte alors un système de déplacement 80 pour déplacer en continu chaque moyen de soutien en fonction de la position de la tête d'un passager.

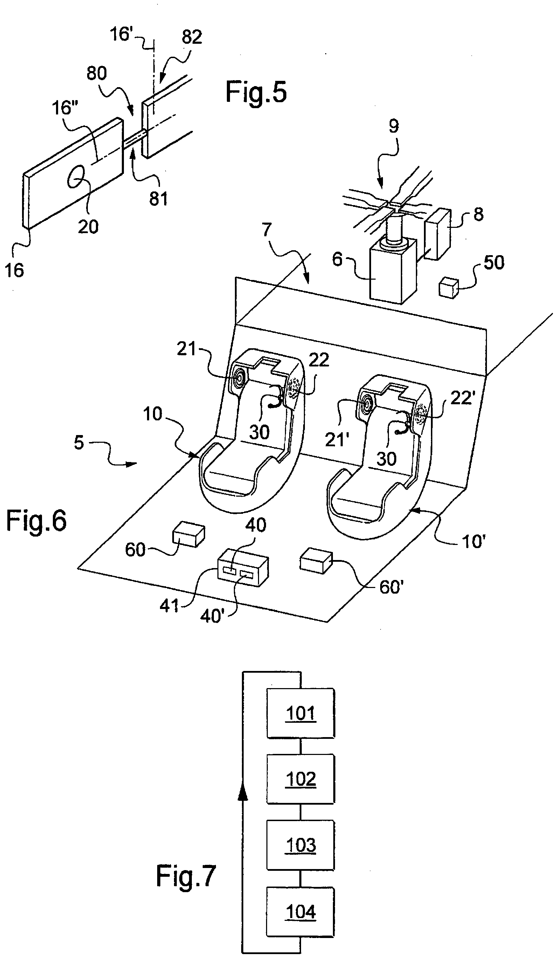

En référence à la figure 5, le moyen de déplacement peut comporter un vérin par axe de rotation. Deux vérins rotatifs 81, 82 sont ainsi schématisés sur la figure 5.

Selon la deuxième variante du deuxième mode de réalisation représentée sur la figure 4, chaque système acoustique 21, 22 comprend une pluralité d'actionneurs acoustiques 20.

Le moyen d'adaptation actif 70 comporte un moyen de contrôle 73 pour contrôler en continu chaque actionneur acoustique en fonction de la position de la tête d'un passager.

Le moyen de contrôle peut être un processeur agissant en parallèle de l'unité de traitement pour introduire un gain à appliquer à chaque signal de commande.

Ainsi, le moyen de contrôle peut augmenter, réduire, voire annuler le bruit devant être émis par chaque actionneur acoustique en fonction de la position de la tête d'un individu.

Le moyen de contrôle peut aussi représenter un segment de code exécuté par un processeur de l'unité de traitement par exemple.

Par ailleurs, en référence à la figure 2 et quel que soit le mode de réalisation, chaque support 11, 12 peut comporter un moyen d'isolation acoustique passif 90.

Chaque support 11, 12 d'un système acoustique comportant un moyen de soutien portant chaque actionneur acoustique du système acoustique, chaque moyen de soutien comporte une coque 91. Ledit moyen d'isolation acoustique passif 90 inclut un isolant acoustique 92, par exemple constitué partiellement de mousse, agencé dans chaque coque 91.

La coque de chaque support peut aussi participer au traitement passif du bruit en mettant en oeuvre des techniques connues. Par exemple, la coque peut comprendre à cet effet des micro-perforations.

En outre, le dispositif comporte un dispositif de dosage 95 configuré pour déterminer la dose de bruit reçue par le passager à partir d'informations provenant dudit capteur de bruit local, ledit dispositif de dosage coopérant avec ladite unité de traitement.

Ce dispositif de dosage peut être un segment de code exécuté par un processeur de l'unité de traitement.

La figure 6 présente un véhicule 5 muni d'une pluralité de sièges, en l'occurrence deux sièges 10, 10' munis chacun d'un dispositif de traitement du bruit.

Ainsi, le premier siège 10 comporte deux systèmes acoustiques 21, 22, associés à un capteur acoustique de bruit local 30 et un capteur de position 60 de la tête du passager. Le dispositif du premier siège comporte alors une première unité de traitement 40.

De même, le deuxième siège 10' comporte deux systèmes acoustiques 21', 22' associés à un capteur acoustique de bruit local 30' et un capteur de position 60' de la tête du passager. Le dispositif du deuxième siège comporte alors une deuxième unité de traitement 40'.

Les première et deuxième unités de traitement 40, 40' font alors avantageusement partie d'un unique calculateur 41, chaque unité de traitement étant par exemple un segment de code programmé dans un processeur du calculateur 41. On comprend néanmoins que les première et deuxième unités de traitement 40, 40' peuvent comprendre un premier et un deuxième processeurs indépendants à savoir un processeur par siège.

En outre, les dispositifs de traitement du bruit de chaque siège font chacun appel à un capteur de bruit primaire 50 de référence, un capteur de bruit primaire 50 de référence commun aux deux dispositifs par exemple ou encore un capteur de bruit primaire par dispositif.

Ce capteur de bruit primaire 50 de référence est corrélé à la source de bruit à annuler. Le véhicule 5 étant un aéronef muni d'une boîte de transmission principale de puissance 6 agencée entre un moteur 8 et un rotor 9, le capteur de bruit primaire 50 est par exemple agencé dans le compartiment 7 accueillant la boîte de transmission principale de puissance 6.

La figure 7 explicite le procédé mis en oeuvre par le dispositif D de traitement du bruit.

Lors d'une phase 101, le capteur acoustique de bruit local acquiert le bruit local et transmet un signal acoustique de bruit local représentatif de bruit mesuré à l'unité de traitement du dispositif.

Lors d'une phase 102, l'unité de traitement détermine le bruit primaire à contrôler par la création d'un bruit secondaire.

Si l'unité de traitement utilise une technique anticipative, cette unité de traitement fait appel à un capteur de bruit primaire de référence qui lui envoie un signal de bruit primaire relatif audit bruit primaire.

Par contre, si l'unité de traitement utilise une technique rétroactive, l'unité de traitement utilise son algorithme pour reconstituer ladite référence de bruit primaire.

Lors d'une phase 103, l'unité de traitement élabore un signal de commande en filtrant ladite référence de bruit primaire à l'aide d'un filtre adaptatif faisant appel à une pluralité de coefficients.

Les coefficients de ce filtre sont recalculés à chaque pas d'échantillonnage, de façon à injecter une commande aux actionneurs acoustiques propre à minimiser le signal reçu par le capteur de bruit local. Le calcul de ces coefficients nécessite également la connaissance préalable d'au moins une fonction de transfert entre l'individu assis sur un siège et les actionneurs acoustiques.

Dès lors, on détermine la position de la tête de cet individu pour maintenir chaque fonction de transfert utilisée lors de l'élaboration du signal de commande représentative du chemin à parcourir par ledit contre-bruit :
- soit en agissant sur chaque système acoustique afin de maintenir constante chaque fonction de transfert utilisée par l'unité de traitement, et/ou
- soit en choisissant dans une bibliothèque chaque fonction de transfert à utiliser en fonction de la position courante de ladite tête,

Ainsi, en fonction du bruit primaire et du bruit local déterminé précédemment, l'algorithme mis en oeuvre par l'unité de traitement adapte lesdits coefficients et les fonctions de transfert et/ou lesdits coefficients et les systèmes acoustiques pour minimiser le bruit local au niveau de la tête du passager

Lors d'une phase 104, l'unité de traitement envoie des signaux de commande aux actionneurs acoustiques qui émettent un bruit secondaire ayant pour but d'être en opposition de phase avec le bruit primaire à contrôler.

Eventuellement, avant d'envoyer le signal de commande, l'unité de traitement vérifie que la tête du passager se trouve dans une zone d'action prédéterminée des actionneurs acoustiques. Dans la négative, l'unité de traitement n'envoie pas l'ordre d'émettre le bruit secondaire aux actionneurs acoustiques.

Par ailleurs, il est à noter que l'unité de traitement peut comporter un module de pondération, ce module réalisant une pondération des signaux entrant dans l'unité de traitement et/ou une pondération des signaux de commande des actionneurs acoustiques. La pondération permet alors d'optimiser un ou plusieurs paramètres de confort acoustique, en particulier la sonie ou le niveau en dBA, dBG, ou dBSIL4, ou un indicateur de confort spécifique du véhicule.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Dispositif (D) de traitement du bruit à proximité d'une tête d'un passager d'un véhicule (5), ledit dispositif (D) comportant au moins un capteur acoustique de bruit local (30, 30'), ledit dispositif (D) comportant au moins un système acoustique (21, 22, 21', 22') pour générer un contre-bruit, chaque système acoustique (21, 22, 21', 22') étant muni d'un support (11, 12, 16, 17) et d'au moins un actionneur acoustique (20) porté par le support, ledit dispositif comportant :
- un capteur de position (60) pour déterminer la position de ladite tête,
- au moins une unité de traitement (40, 40') reliée au capteur acoustique de bruit local (30, 30') pour recevoir un signal de bruit local, l'unité de traitement étant configurée pour délivrer à chaque actionneur acoustique (20) un signal de commande au moins en fonction dudit signal de bruit local et d'au moins une fonction de transfert par oreille relative au transfert des ondes acoustiques entre un actionneur acoustique et ledit passager,
- un moyen d'adaptation actif (70) coopérant avec ledit capteur de position pour maintenir chaque fonction de transfert utilisée lors de l'élaboration de chaque signal de commande représentative du chemin à parcourir par ledit contre-bruit.
**caractérisé en ce que**, ledit support comportant un moyen de soutien par système acoustique, chaque moyen de soutien portant au moins un actionneur acoustique, ledit moyen d'adaptation actif comporte un système de déplacement (80) pour déplacer en continu chaque moyen de soutien en fonction de la position de la tête d'un passager afin de maintenir chaque fonction de transfert utilisée lors de l'élaboration de chaque signal de commande représentative du chemin à parcourir par ledit contre-bruit.

2. Dispositif selon la revendication 1,
**caractérisé en ce que** chaque support comporte un moyen d'isolation acoustique passif (90).

3. Dispositif selon la revendication 2,
**caractérisé en ce que**, chaque support d'un système acoustique comportant un moyen de soutien portant chaque actionneur acoustique du système acoustique, chaque moyen de soutien comportant une coque, ledit moyen d'isolation acoustique passif (90) inclut un isolant acoustique en mousse (92) agencé dans chaque coque (91).

4. Dispositif selon l'une quelconque des revendications précédentes,
**caractérisé en ce que** ledit dispositif comporte un dispositif de dosage (95) configuré pour déterminer la dose de bruit reçue par le passager à partir d'informations provenant dudit capteur de bruit local, ledit dispositif de dosage (95) coopérant avec ladite unité de traitement.

5. Dispositif selon l'une quelconque des revendications précédentes,
**caractérisé en ce que** ledit capteur acoustique de bruit local (30, 30') est disposé sur ladite tête.

6. Dispositif selon l'une quelconque des revendications précédentes,
**caractérisé en ce que** ledit dispositif comporte deux systèmes acoustiques disposés de part et d'autre de la tête dudit passager.

7. Dispositif selon l'une quelconque des revendications précédentes,
**caractérisé en ce que** ledit dispositif comporte un capteur de bruit primaire (50) corrélé à une source du bruit à traiter, ledit capteur de bruit primaire (50) étant relié à l'unité de traitement (40) pour lui fournir un signal de bruit primaire.

8. Véhicule (5) muni d'au moins un siège (10, 10') pour accueillir un passager, ledit véhicule (5) comportant un dispositif (D) de traitement du bruit autour de la tête d'un passager assis dans ledit siège (10, 10'),
**caractérisé en ce que** ledit dispositif (D) de traitement du bruit est selon l'une quelconque des revendications précédentes.

9. Véhicule selon la revendication 8,
**caractérisé en ce que** ledit support est un appui-tête.

10. Véhicule selon la revendication 8,
**caractérisé en ce que**, ledit dispositif comporte un capteur de bruit primaire (50) relié à l'unité de traitement (40, 40') du dispositif (D) pour lui fournir un signal de bruit primaire, ledit véhicule (5) étant un aéronef muni d'une boîte de transmission principale de puissance (6) entre un moteur (8) et un rotor (9), ladite boîte de transmission principale de puissance (6) étant agencée dans un compartiment (7) donné, ledit capteur de bruit primaire (50) étant disposé dans ledit compartiment (7).

11. Procédé d'atténuation du bruit à bord d'un véhicule comportant un siège (10, 10') apte à accueillir un passager en utilisation, un dispositif (D) selon la revendication 1 comportant au moins un système acoustique muni d'un support et d'au moins un actionneur acoustique (20) porté par le support, ledit support comportant un moyen de soutien par système acoustique portant au moins un actionneur acoustique, au cours duquel on effectue une filtration active du bruit :
- en déterminant en permanence un bruit local au niveau de la tête du passager indépendamment de la position de ladite tête à l'aide d'un capteur de bruit local,
- en élaborant un signal de commande d'au moins un actionneur acoustique (20) à partir du bruit local mesuré pour créer un contre-bruit générant une bulle de silence mobile liée à la tête du passager, et à partir d'au moins une fonction de transfert relative à un filtre acoustique naturel lié à l'environnement du siège (10, 10'),
- en déterminant la position de ladite tête et
- en déplaçant en continu chaque moyen de soutien en fonction de la position de la tête d'un passager afin de maintenir chaque fonction de transfert utilisée lors de l'élaboration de chaque signal de commande représentative du chemin à parcourir par ledit contre-bruit.

12. Procédé selon la revendication 11,
**caractérisé en ce qu'**on effectue une filtration passive du bruit à l'aide d'un moyen passif comprenant un support isolé acoustiquement.

## Patentansprüche

1. Vorrichtung (D) zur Geräuschminderung in der Nähe eines Kopfes eines Insassen eines Fahrzeugs (5), wobei die Vorrichtung (D) mindestens einen lokalen akustischen Geräuschsensor (30, 30') umfasst, wobei die Vorrichtung (D) mindestens ein akustisches System (21, 22, 21', 22') zur Erzeugung eines Gegengeräusches umfasst, wobei jedes akustische System (21, 22, 21', 22') mit einer Halterung (11, 12, 16, 17) und mindestens einem von der Halterung getragenen akustischen Aktor (20) ausgestattet ist, wobei die Vorrichtung umfasst:
- einen Positionssensor (60) zum Bestimmen der Position des Kopfes,
- mindestens eine Verarbeitungseinheit (40, 40'), die mit dem lokalen akustischen Geräuschsensor (30, 30') verbunden ist, um ein lokales Geräuschsignal zu empfangen, wobei die Verarbeitungseinheit konfiguriert ist, um jedem akustischen Aktor (20) ein Steuersignal mindestens in Abhängigkeit von dem lokalen Geräuschsignal und von mindestens einer sich auf die Übertragung von akustischen Wellen zwischen einem akustischen Aktor und dem Insassen beziehenden Übertragungsfunktion pro Ohr bereitzustellen,
- eine aktive Anpassungseinrichtung (70), die mit dem Positionssensor zusammenwirkt, um jede Übertragungsfunktion, die bei der Erzeugung jedes Steuersignals verwendet wird, für den von dem Gegengeräusch zurückzulegenden Weg repräsentativ zu halten,
**dadurch gekennzeichnet, dass** die Halterung eine Trägereinrichtung pro akustischem System umfasst, wobei jede Trägereinrichtung mindestens einen akustischen Aktor aufweist, wobei die aktive Anpassungseinrichtung ein Verstellsystem (80) umfasst, um jede Trägereinrichtung kontinuierlich gemäß der Position des Kopfes eines Insassen zu bewegen, um jede Übertragungsfunktion, die bei der Erzeugung jedes Steuersignals verwendet wird, für den von dem Gegengeräusch zurückzulegenden Weg repräsentativ zu halten.

2. Vorrichtung nach Anspruch 1, **dadurch gekennzeichnet, dass** jede Halterung eine passive Schalldämmeinrichtung (90) aufweist.

3. Vorrichtung nach Anspruch 2, **dadurch gekennzeichnet, dass** jede Halterung eines akustischen Systems eine Trägereinrichtung umfasst, die jeden akustischen Aktor des akustischen Systems trägt, wobei jede Trägereinrichtung eine Hülle aufweist, wobei die passive Schalldämmeinrichtung (90) eine in jeder Hülle (91) angeordnete Schaumstoff-Schallisolierung (92) umfasst.

4. Gerät nach einem der vorhergehenden Ansprüche,
**dadurch gekennzeichnet, dass** die Vorrichtung eine Messvorrichtung (95) beinhaltet, die konfiguriert ist, um die vom Insassen empfangene Geräuschdosis aus Informationen zu bestimmen, die von dem lokalen Geräuschsensor abgeleitet sind, wobei die Messvorrichtung (95) mit der Verarbeitungseinheit zusammenwirkt.

5. Gerät nach einem der vorhergehenden Ansprüche,
**dadurch gekennzeichnet, dass** der lokale akustische Geräuschsensor (30, 30') an dem Kopf angeordnet ist.

6. Vorrichtung nach einem der vorhergehenden Ansprüche,
**dadurch gekennzeichnet, dass** die Vorrichtung zwei akustische Systeme umfasst, die auf beiden Seiten des Kopfes des Insassen angeordnet sind.

7. Vorrichtung nach einem der vorstehenden Ansprüche,
**dadurch gekennzeichnet, dass** die Vorrichtung einen Sensor für primäres Geräusch (50) umfasst, das mit einer Quelle des zu mindernden Geräusches korreliert ist, wobei der Sensor für primäres Geräusch (50) mit der Verarbeitungseinheit (40) verbunden ist, um ihr ein primäres Geräuschsignal zu liefern.

8. Fahrzeug (5), das mindestens einen Sitz (10, 10') zur Aufnahme eines Insassen aufweist, wobei das Fahrzeug (5) eine Vorrichtung (D) zur Geräuschminderung um den Kopf eines auf dem Sitz (10, 10') sitzenden Insassen herum umfasst,
**dadurch gekennzeichnet, dass** die Vorrichtung (D) zur Geräuschminderung einem der vorgenannten Ansprüche entspricht.

9. Fahrzeug nach Anspruch 8,
**dadurch gekennzeichnet, dass** die Halterung eine Kopfstütze ist.

10. Fahrzeug nach Anspruch 8,
**dadurch gekennzeichnet, dass** die Vorrichtung einen Sensor (50) für primäres Geräusch umfasst, der mit der Verarbeitungseinheit (40, 40') der Vorrichtung (D) verbunden ist, um ihr ein primäres Geräuschsignal zu liefern, wobei das Fahrzeug (5) ein Luftfahrzeug ist, das mit einer Hauptgetriebebox (6) zwischen einem Motor (8) und einem Rotor (9) ausgestattet ist, wobei die Hauptgetriebebox (6) in einem gegebenen Abteil (7) angeordnet ist und der Sensor (50) für primäres Geräusch in dem Abteil (7) angeordnet ist.

11. Verfahren zur Geräuschminderung an Bord eines Fahrzeugs, das einen Sitz (10, 10'), der in der Lage ist, bei Gebrauch einen Fahrgast aufzunehmen, und eine Vorrichtung (D) nach Anspruch 1 aufweist, die mindestens ein akustisches System umfasst, das mit einer Halterung und mindestens einem von der Halterung getragenen akustischen Aktor (20) versehen ist, wobei die Halterung eine Trägereinrichtung pro akustischem System umfasst, die mindestens einen akustischen Aktor trägt,
bei dem eine aktive Geräuschfilterung durchgeführt wird:
- durch kontinuierliches Bestimmen von lokalem Geräusch am Kopf des Insassen unabhängig von der Position des Kopfes unter Verwendung eines lokalen Geräuschsensors,
- durch Erzeugen eines Steuersignals für mindestens einen akustischen Aktor (20) aus dem gemessenen lokalen Geräusch, um ein Gegengeräusch zu erzeugen, das eine mit dem Kopf des Fahrgastes verbundene mobile Stilleblase erzeugt, und aus mindestens einer Übertragungsfunktion, die bezogen ist auf einen mit der Umgebung des Sitzes (10, 10') verknüpften natürlichen akustischen Filter,
- durch Bestimmen der Position des Kopfes und
- durch kontinuierliches Bewegen jeder Trägereinrichtung in Übereinstimmung mit der Position des Kopfes eines Fahrgastes, um jede Übertragungsfunktion, die bei der Erzeugung jedes Steuersignals verwendet wird, für den von dem Gegengeräusch zurückzulegenden Weg repräsentativ zu halten.

12. Verfahren nach Anspruch 11,
**dadurch gekennzeichnet, dass** die passive Geräuschfiltration unter Verwendung einer passiven Einrichtung durchgeführt wird, die eine akustisch isolierte Halterung umfasst.

## Claims

1. A device (D) for treating noise in proximity to the head of a passenger of a vehicle (5), said device (D) comprising at least one local noise sound sensor (30, 30'), said device (D) comprising at least one sound system (21, 22, 21', 22') for generating an anti-noise, each sound system (21, 22, 21', 22') being provided with a support (11, 12, 16, 17) and at least one sound actuator (20) carried by the support, said device comprising:
- a position sensor (60) for determining the position of said head,
- at least one treatment unit (40, 40') connected to the local noise sound sensor (30, 30') to receive a local noise signal, the treatment unit being configured to deliver a control signal to each sound actuator (20), which control signal is a function at least of said local noise signal and of at least one transfer function per ear and relating to the transfer of sound waves between a sound actuator and said passenger,
- active matching means (70) cooperating with said position sensor to keep each transfer function that is used in preparing each control signal representative of a path to be travelled by said anti-noise,
**characterised in that** said support comprises a maintaining means per sound system, each maintaining means carrying at least one sound actuator, said active matching means comprising a movement system (80) for continuously moving each maintaining means as a function of the position of the head of a passenger so as to keep each transfer function used in preparing each control signal representative of the path to be travelled by said anti-noise.

2. Device according to Claim 1,
**characterised in that** each support comprises passive soundproofing means (90).

3. Device according to Claim 2,
**characterised in that** each support of a sound system comprises maintaining means carrying each sound actuator of the sound system, with each maintaining means comprising a shell, said passive soundproofing means (90) includes a foam soundproofing material (92) arranged in each shell (91).

4. Device according to any one of the preceding claims,
**characterised in that** said device comprises a dose-metering device (95) configured to determine the dose of noise received by the passenger on the basis of information coming from said local noise sensor, said dose-metering device (95) cooperating with said treatment unit.

5. Device according to any one of the preceding claims,
**characterised in that** said local noise sound sensor (30, 30') is arranged on said head.

6. Device according to any one of the preceding claims,
**characterised in that** said device comprises two sound systems arranged on either side of the head of said passenger.

7. Device according to any one of the preceding claims,
**characterised in that** said device comprises a primary noise sensor (50) correlated with a source of noise to be treated, said primary noise sensor (50) being connected to the treatment unit (40) in order to provide it with a primary noise signal.

8. A vehicle (5) having at least one seat (10, 10') for receiving a passenger, said vehicle (5) having a noise treatment device (D) around the head of a passenger sitting in said seat (10, 10'),
**characterised in that** said noise treatment device (D) is a device according to any one of the preceding claims.

9. Vehicle according to Claim 8,
**characterised in that** said support is a headrest.

10. Vehicle according to Claim 8,
**characterised in that** said device comprises a primary noise sensor (50) connected to the treatment unit (40, 40') of the device (D) to provide it with a primary noise signal, said vehicle (5) being an aircraft having a main gearbox (6) between an engine (8) and a rotor (9), said main gearbox (6) being arranged in a given compartment (7), and said primary noise sensor (50) being placed in said compartment (7).

11. A method for attenuating noise on board a vehicle comprising a seat (10, 10') suitable for receiving a passenger when in use, a device (D) according to Claim 1 comprising at least one sound system provided with a support and at least one sound actuator (20) carried by the support, said support comprising a maintaining means per sound system carrying at least one sound actuator, wherein active filtering of the noise is carried out by:
- continuously determining local noise at the passenger's head independently of the position of said head by means of a local noise sensor;
- generating a control signal of at least one sound actuator (20) on the basis of the measured local noise in order to create an anti-noise for generating a movable bubble of silence associated with the passenger's head, and on the basis of at least one transfer function relating to a natural sound filter associated with the environment of the seat (10, 10'),
- determining the position of said head, and
- continuously moving each maintaining means in relation to the position of the head of a passenger so as to keep each transfer function used in preparing each control signal representative of the path to be travelled by said anti-noise.

12. Method according to Claim 11,
**characterised in that** passive noise filtering is performed using passive means comprising a soundproof support.
